# EUROPÄISCHE PATENTSCHRIFT

(11) **EP 1 794 473 B1**
(45) Veröffentlichungstag und Bekanntmachung des Hinweises auf die Patenterteilung: **17.09.2008**
(21) Anmeldenummer: 05770159.1
(22) Anmeldetag: 11.08.2005
(51) Int. Cl.: F16H 7/08, F16H 7/12

(54) **HYDRAULISCHES SPANNELEMENT**
HYDRAULIC FASTENING ELEMENT
ELEMENT DE SERRAGE HYDRAULIQUE

(30) Priorität: 30.09.2004 DE 102004047450
(43) Veröffentlichungstag der Anmeldung: 13.06.2007
(73) Patentinhaber: Schaeffler KG, 91074 Herzogenaurach (DE)
(72) Erfinder: PETRI, Werner, 91058 Erlangen (DE); HARTMANN, Bernd, 91085 Weisendorf (DE)
(86) Internationale Anmeldenummer: PCT/EP2005/008707
(87) Internationale Veröffentlichungsnummer: WO 2006/037398

(56) Entgegenhaltungen:
- EP-A- 0 329 738
- DE-A1- 19 538 401
- DE-A1- 19 743 480
- DE-C1- 4 039 816
- DE-C1- 19 680 338

## Beschreibung

Die vorliegende Erfindung betrifft ein hydraulisches Spannelement, das zum Spannen eines Zugmittels, wie beispielsweise Riemen oder Ketten eines bevorzugt für Brennkraftmaschinen bestimmten Zugmitteltriebs vorgesehen ist, entsprechend dem Oberbegriff des Anspruchs 1 und wie es aus dem Dokument DE 4039816 C bekannt ist. Das hydraulische Spannelement umfasst ein ortsfest und gleichzeitig schwenkbar angeordnetes, einen Zylinder bildendes Gehäuseteil sowie ein weiteres mittelbar oder unmittelbar mit einer Spannrolle verbundenes Maschinenteil, zwischen denen ein Federmittel eingesetzt ist. Der Zylinder des Gehäuseteils ist zur Aufnahme, d. h. zur Führung eines mit dem Maschinenteil verbundenen Kolbens bestimmt. In der Einbaulage begrenzt der Kolben stirnseitig einen mit Hydraulik gefüllten Druckraum des Zylinders, wobei eine Fluidverbindung zwischen dem Druckraum und einem Vorratsraum des Spannelementes besteht.

### Hintergrund der Erfindung

Ein Beispiel für ein hydraulisches Spannelement offenbart die DE 196 09 420 A1. Zur Führung des Kolbens weist dieses Spannelement eine im Gehäuseteil eingepresste Führungsbuchse auf, der axial nach außen vorgelagert ein weiteres Bauteil, eine in einer Außenwandung des Gehäuseteils eingesetzte Dichtscheibe zugeordnet ist. Die zur Führung des Kolbens bestimmte Buchse in Verbindung mit der Dichtscheibe dient zur Erzielung einer Abdichtung des Kolbens gegenüber dem Gehäuseteil. Der von der Führungsbuchse gestaltete, mit Hydraulikfluid gefüllte Druckraum wird stirnseitig von der Kolbenstange begrenzt. Als teilweise mit Hydraulikfluid gefüllter Vorratsraum ist ein kreisringförmig gestalteter Bauraum bestimmt, welcher innenseitig von der Außenkontur der Führungsbuchse und außenseitig von der Innenseite einer Außenwandung des Gehäuseteils begrenzt ist. Der Vorratsraum dient zusätzlich zur Aufnahme des Federmittels, das zwischen dem Gehäuseteil und dem die Kolbenstange beinhaltende Maschinenteil abgestützt ist.

Ein weiteres hydraulisches Spannelement offenbart die DE 41 24 500 A1. Dabei übernimmt das topfartig gestaltete Gehäuseteil die Funktion des teilweise mit Hydraulikfluid gefüllten Vorratsraums. Weiterhin bildet das Gehäuseteil eine Führungs- und Dichtungseinheit für die Kolbenstange an dem vom Befestigungsauge des Gehäuseteils abgewandten Ende. Ein als separates Bauteil ausgebildeter Zylinder ist in das Gehäuseteil eingepresst und dient einerseits zur Führung der Kolbenstange und bildet außerdem den Druckraum für das Hydraulikfluid.

Übereinstimmend erfolgt bei einer Verstellung der Kolbenstange gegenüber dem ortsfesten Gehäuseteil der bekannten hydraulische Spannelemente ein Volumenaustausch des Hydraulikfluids zwischen dem Druckraum und dem Vorratsraum, wobei die Strömungsrichtung von der Stellbewegung der Kolbenstange abhängig ist. Bei einer Verstellung der Kolbenstange in Richtung des Druckraums kann Hydraulikfluid über einen sich zwischen der Kolbenstange und der Zylinderbuchse bzw. Führungsbuchse einstellenden Leckspalt in den Vorratsraum entweichen. Bei einer umgekehrten Stellbewegung des Kolbens strömt Hydraulikfluid von dem Vorratsraum über ein bodenseitig des Druckraums positioniertes Einwegventil in den Druckraum.

Der Bauraum dieser bekannten hydraulischen Spannelemente wird durch die Außenkontur des Gehäuseteils beeinflusst, das den Vorratsraum für das Hydraulikfluid außenseitig begrenzt. Damit verbunden stellt sich ein begrenzter Bauraum für das vorzugsweise als Druckfeder ausgebildete Federmittel ein. Die Funktion, die Dämpfungscharakteristik, des Spannelementes wird wesentlich von dem Leckspalt zwischen dem Kolben und dem Zylinder bestimmt. Dieser Leckspalt verändert sich temperaturabhängig beispielsweise bei Bauteilen, die aus unterschiedlichen Werkstoffen hergestellt sind verbunden mit einer unterschiedlichen Wirkungsweise. Um diesen Leckspalt zu minimieren ist ein hoher Fertigungsaufwand erforderlich, um diese Bauteile mit eng tolerierten Maßen zu fertigen, zur Erzielung eines definierten Leckspaltes, der über einen weiten Temperaturbereich ein möglichst gleiches Dämpfungsverhalten des Spannelementes gewährleistet.

### Zusammenfassung der Erfindung

Aufgabe der vorliegenden Erfindung ist, ein Spannelement zu schaffen mit einer temperaturunabhängigen Funktion eines bauraumoptimiert gestalteten einen großen Hub aufweisenden Spannelementes. Weiterhin soll das Spannelement eine kostengünstige Fertigung ermöglichen, versehen mit einer geschützten, wirksamen Kolbenstangenabdichtung sowie einem Aufbau, der keine bauraumbedingte, beschränkte Auslegung des Federmittels erfordert.

Erfindungsgemäß wird diese Problemstellung durch ein hydraulisches Spannelement mit den Merkmalen des Anspruchs 1 gelöst. Diese Kolbengestaltung gewährleistet ein bauraumoptimiertes Spannelement, da für den Vorratsraum außerhalb des Zylinders und des Kolbens kein zusätzlicher Bauraum benötigt wird. Über die dem Kolben zugeordnete Ventilbaugruppe erfolgt bei einer Stellbewegung des Kolbens ein Volumenaustausch des Druckfluids zwischen dem Druckraum und dem Vorratsraum. Bei einer Stellbewegung des Kolbens in Richtung des Druckraums strömt Hydraulikfluid über die Ventilgruppe von dem Druckraum in den Vorratsraum des Kolbens. Eine Umkehrung der Stellbewegung des Kolbens führt zu einer entgegengesetzten Strömungsrichtung des Hydraulikfluids von dem Vorratsraum in den Druckraum.

Die erfindungsgemäße Gestaltung des Kolbens mit integriertem Vorratsraum bewirkt bei einem Zusammendrücken des Spannelementes, d. h. einer Stellbewegung des Kolbens in Richtung des Druckraums, einen Druckanstieg in dem Vorratsraum, da dieser topfförmig gestaltet einen geschlossenen Raum bildet. Der erhöhte Druck in dem Vorratsraum unterstützt bei einer entgegengesetzen Stellbewegung des Kolbens die Nachsaugfunktion und verbessert damit die Reaktionsfähigkeit, eine gewünschte schnelle selbsttätige Nachstellung des hydraulischen Spannelementes, beispielsweise bei einer kurzzeitigen Entlastung des Zugmittels.

Im Vergleich zu bisherigen hydraulischen Spannelementen erfordert das erfindungsgemäße Konzept keine definierte engtolerierte maßliche Abstimmung zwischen dem Kolben und dem Zylinder, um den Leckspalt zu definieren, über den ein Druckmittelausgleich erfolgt. Dieser nachteilig eine temperaturabhängige Dämpfung aufweisende Leckspalt bisheriger hydraulischer Spannelemente, beeinflusst die Funktion, insbesondere das Dämpfungsverhalten, was sich außerdem auf das Geräuschniveau des Zugmitteltriebs auswirkt. Durch den Wegfall des Leckspaltes bei dem erfindungsgemäßen Konzept stellt sich ein Kostenvorteil bei der Fertigung des Spannelementes ein.

Der als Hohlkörper gestaltete Kolben, in dem gleichzeitig die Ventilbaugruppe integriert ist, ermöglicht ein bauraumoptimiertes Spannelement sowohl in radialer als auch in axialer Richtung. Durch den im Bauraum des Kolbens integrierten Vorratsraum für das Hydraulikfluid wird dazu kein weiterer Bauraum benötigt, wodurch sich insbesondere in radialer Richtung ein reduzierter Bauraum einstellt.

Die dem Kolben zugeordnete Ventilbaugruppe bewirkt im Vergleich zu bisherigen Lösungen eine wünschenswert verkürzte axiale Länge des Druckraums, was sich vorteilhaft auf die gesamte Länge des Spannelementes auswirkt. Andererseits ermöglicht das erfindungsgemäße Konzept einen größeren Hub bei relativ kleiner Ausgangslänge des Spannelementes. Damit vergrößert sich vorteilhaft ein Verhältnis zwischen der axialen Länge und dem maximalen Hub des Spannelementes.

Zur Abdichtung des Kolbens innerhalb des Zylinders sieht die Erfindung eine separate Abdichtung vor, so dass ohne Rücksicht auf einen Leckspalt ein für die Funktion, d. h. für die Dämpfung optimal ausgelegte Abdichtung des Kolbens innerhalb des Zylinders erfolgen kann. Die Abdichtung erfolgt dabei einerseits unter Berücksichtigung eines wünschenswert geringen Verlustes an Hydraulikfluid und andererseits im Hinblick auf eine geringe Reibung.

Ein weiterer vorteilhafter Einfluss stellt sich auf die Gestaltung bzw. Dimensionierung des Federmittels ein, da dieses im Unterschied zu bekannten Spannelementen nicht innerhalb des für das Hydraulikfluid bestimmten Vorratsraums eingesetzt ist, sondern davon getrennt angeordnet ist. Das bevorzugt außenliegend den Zylinder sowie den Kolben umschließende Federmittel kann dabei beispielsweise im Hinblick auf große Federkräfte oder zur Erzielung einer flachen Federkennlinie bzw. Federkonstante ausgelegt werden.

Weitere vorteilhafte Ausgestaltungen der Erfindung sind Gegenstand der abhängigen Ansprüche 2 bis 20.

Eine bevorzugte Ausgestaltung der Erfindung sieht vor, eine Drosselöffnung der Ventilbaugruppe zuzuordnen, über die ein Ausgleich des Hydraulikfluids bei einer Stellbewegung des Kolbens erfolgen kann. Der Querschnitt der Drosselöffnung beeinflusst dabei unmittelbar das Dämpfungsverhalten des hydraulischen Spannelementes. Vorteilhaft kann damit eine gezielte, temperaturunabhängige Dämpfungscharakteristik des hydraulischen Spannelementes erreicht werden.

Das Volumen des in dem Kolben integrierten, für das Hydraulikfluid bestimmten Vorratsraums übertrifft das Volumen des Druckraums. Dieses Auslegungskriterium ermöglicht eine für die Funktion des Spannelementes vorteilhafte, ausschließlich von der Ventilbaugruppe bzw. einer zugehörigen Drosselöffnung beeinflussten Stellbewegung des Kolbens und der damit verbundenen Dämpfungscharakteristik.

Gemäß der Erfindung kann die Drosselöffnung bzw. eine die Drosselöffnung zugeordnete Komponente innerhalb der Ventilbaugruppe so ausgelegt werden, das sich Volumenstrom des Hydraulikfluids von der Durchflussrichtung abhängig verändert. Für die Zusammendrückfunktion des Spannelementes ist dabei bevorzugt ein kleinerer Volumenstrom vorgesehen im Vergleich zu der Nachsaugfunktion, um so einen positiven Einfluss auf die Dämpfung des Spannelementes zu erzielen.

Eine weitere Ausgestaltung der Erfindung sieht vor, die Ventilbaugruppe zusätzlich zu der Drosselöffnung mit einem Überdruckventil zu versehen. Das beispielsweise als ein federbelastetes Plattenventil oder Kugelventil ausgeführte als ein Einwegventil ausgelegte Überdruckventil vergrößert bei einer auftretenden Druckspitze kurzfristig den Durchströmquerschnitt. Dieser Bypass öffnet sich beispielsweise bei der Zusammendrückfunktion des Spannelementes aufgrund einer extremen Krafteinleitung, durch den Hydraulikfluid von der Druckkammer in den Vorratsraum beschleunigt entweichen kann.

Zur Abdichtung des Kolbens gegenüber dem Zylinder weist der Kolben zumindest eine separate Abdichtung oder Dichtung auf, die im eingebauten Zustand kraftschlüssig, d. h. unter Vorspannung an der Innenwandung des Zylinders anliegt und damit wirksam einen sich zwischen dem Kolben und dem Zylinder bildenden Ringspalt abdichtet. Der Kolben weist dazu bevorzugt endseitig einen radial aufgeweiteten, Ringnuten bildenden Führungsabschnitt auf, der unter Einhaltung eines definierten Ringspaltes bis an die Innenwandung des Zylinders geführt ist. Der Führungsabschnitt ist mit umlaufenden Ringnuten versehen, entsprechend der Anzahl der eingesetzten, vorzugsweise als Dichtringe gestalteten Dichtungen, wie beispielsweise für Kolbenstangen geeignete Quadringe, oder O-Ringe, welche im eingebauten Zustand die Ringnut zumindest teilweise ausfüllend, mit speziellen Dicht- oder Abstreifkanten an der Innenwandung des Zylinders dichtend anliegen.

Das hydraulische Spannelement gemäß der Erfindung weist bevorzugt ein Maschinenteil auf, das einstückig mit dem Kolben verbunden ist. Alternativ dazu bietet es sich an, den Kolben als separat gestaltetes Bauteil in dem Maschinenteil lagepositioniert einzusetzen. Diese Bauform wird bevorzugt für Bauteile eingesetzt, bei denen das Maschinenteil und der Kolben aus unterschiedlichen Werkstoffen hergestellt sind.

Das Gehäuse des hydraulischen Spannelementes ist vorzugsweise mit einem separaten, topfartig gestalteten Zylinder kombiniert, wobei der Zylinder in eine mit der Bauform des Zylinders übereinstimmenden Aufnahme des Gehäuseteils starr dreh- bzw. lagepositioniert ist. Die Erfindung schließt weiterhin ein Gehäuseteil ein, das ein einstückig mit dem Gehäuseteil verbundenen Zylinder einschließt. Bei einer zweiteiligen Ausführung bietet es sich an, einem dem jeweiligen Bauteil entsprechenden und für die Herstellung optimalen Werkstoff auszuwählen.

Für das Gehäuseteil und das Maschinenteil wird bevorzugt ein Kunststoff ausgewählt, z. B. ein glasfaserverstärkter Kunststoff. Dagegen ist der Kolben und der Zylinder aus Stahl bzw. einem Stahlblech hergestellt, wobei diese Bauteile bevorzugt als ein Tiefziehteil gestaltet sind, zur Erzielung einer kostengünstigen Herstellung in hohen Losgrößen.

Bevorzugt ist das hydraulische Spannelement gemäß der Erfindung mit einer Verliersicherung zwischen dem Maschinenteil und dem Gehäuseteil versehen. Diese Maßnahme gewährleistet bei nicht eingebautem Zustand des hydraulischen Spannelementes, das die Einzelteile, insbesondere das Maschinenteil und das Gehäuseteil zusammengefügt bleiben, trotz der Spreizkraft des zwischen beiden Bauteilen eingesetzten Federmittels. Als Sicherung bietet es sich an, einen radial vorgespannten Sicherungsring, beispielsweise einen Wellensicherungsring zu verwenden, welcher bevorzugt innenseitig des Zylinders in einer Nut oder an Haltenoppen fixiert ist und der mit dem Führungsansatz des Kolbens zusammenwirkt. Im nicht eingebauten Zustand stützt sich der Führungsansatz kraftschlüssig an dem Sicherungsring ab.

Vorteilhaft umfasst das hydraulische Spannelement gemäß der Erfindung weiterhin eine Verriegelung, mit der das Spannelement im nicht eingebauten Zustand zusammengedrückt positioniert ist. Als Verriegelung eignet sich dazu eine partiell oder umlaufend an dem Zylinder angeordnete Verlängerung, die in einem zusammengedrückten Zustand des Spannelementes in eine Öffnung des Maschinenteils eingreift. Ein in eine Bohrung des Maschinenteils sowie in einer korrespondierenden Bohrung der Verlängerung eingesetzter Stift, positioniert und fixiert dabei das Gehäuseteil gegenüber dem Maschinenteil.

Als Federmittel für das hydraulische Spannelement eignet sich bevorzugt eine als Schraubenfeder ausgebildete Druckfeder, die sowohl den Kolben als auch den Zylinder außenseitig umschließt. Aufgrund der Verlagerung des Vorratsraums für das Hydraulikfluid in den Kolben bildet die Mantelfläche der Druckfeder gleichzeitig die Außenkontur des Spannelementes. Die erfindungsgemäße Bauform des Spannelementes stellt damit keine Begrenzung des Bauraums für das Federmittel dar, wodurch dieses optimal sowohl im Hinblick auf die Länge als auch auf den Durchmesser ausgelegt werden kann.

Gemäß der Erfindung weist der Zylinder endseitig eine Vordichtung auf, die unter Einhaltung eines Ringspaltes oder mit einer geringen Anpresskraft der Außenkontur des Kolbens zugeordnet ist. Diese Vordichtung verhindert den Eintrag von Verunreinigungen in den Ringspalt, welcher sich zwischen dem Kolben und der Innenwandung des Zylinders bis zu dem Führungsabschnitt des Kolbens einstellt. Bevorzugt eignet sich dazu eine Lippendichtung, die einerseits einen wirksamen Eintritt von Verunreinigungen verhindert und andererseits keine die Funktion des Spannelements verhindernde nachteilige Reibung verursacht. Alternativ zu einer Lippendichtung eignet sich eine Rollenmembran, die beispielsweise zwischen dem Ende des Zylinders und dem Gehäuseteil im Bereich der Federauflage eingesetzt ist.

Die Befestigung des hydraulischen Spannelementes erfolgt vorzugsweise über eine Schraubverbindung. Dazu ist das Maschinenteil wie auch das Gehäuseteil mit sogenannten Anlenkaugen versehen, beispielsweise Metallbuchsen die innerhalb des aus Kunststoff hergestellten Maschinenteils bzw. Gehäuseteils integriert sind. Die Anlenkaugen sind jeweils zur Aufnahme einer Verschraubung vorgesehen, mit denen das hydraulische Spannelement lösbar befestigt ist.

### Kurze Beschreibung der Zeichnungen

Zur weiteren Erläuterung der Erfindung sind die Zeichnungen vorgesehen, die Ausführungsbeispiele in insgesamt vier Figuren darstellen. Es zeigen:
- Figur 1: in einem Längsschnitt ein erfindungsgemäßes hydraulisches Spannelement, bei dem der Kolben einstückig mit dem Maschinenteil verbunden ist;
- Figur 2: das Spannelement gemäß Figur 1, versehen mit einer Verriegelung in einem zusammengepressten Zustand des Spannelementes;
- Figur 3: ein alternativ zu Fig. 1 ausgebildetes Spannelement, bei dem der Kolben als separates Bauteil dem Maschinenteil zugeordnet ist;
- Figur 4: ein Spannelement, bei dem eine Ventilbaugruppe mit einem Überdruckventil kombiniert ist sowie einen Zylinder umfasst, der einstückig mit dem Gehäuseteil verbunden ist;
- Figur 5: ein bekanntes hydraulisches Spannelement im eingebauten Zustand.

### Detaillierte Beschreibung der Zeichnungen

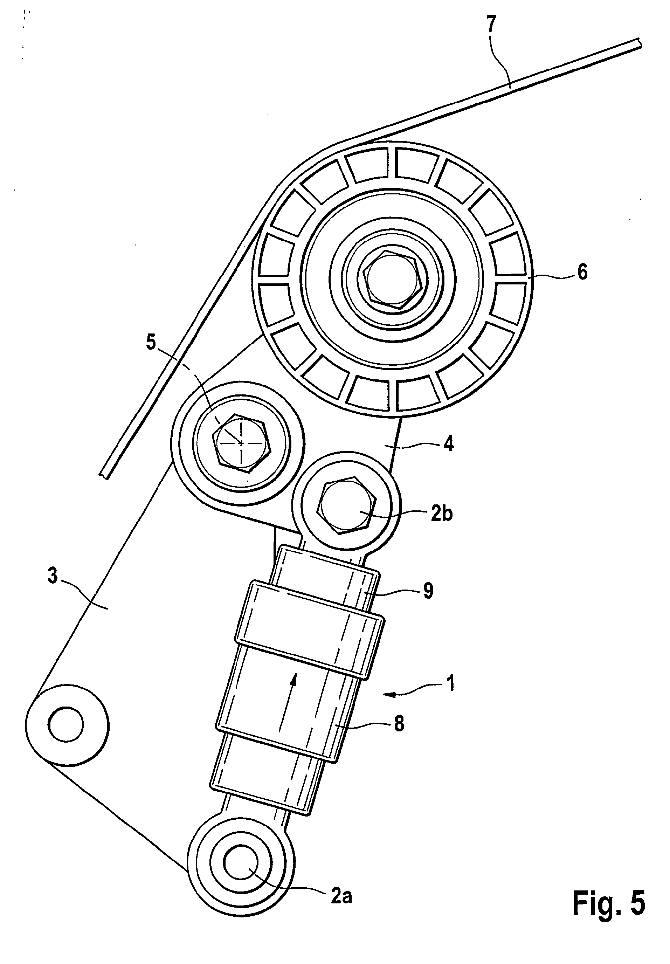

Zur generellen Erläuterung eines hydraulischen Spannelementes im eingebauten Zustand wird zunächst die Figur 5 beschrieben, die ein bekanntes Spannsystem zeigt. Das hydraulische Spannelement 1 ist über ein erstes Gelenklager 2a ortsfest an einem Halteelement 3 befestigt, das beispielsweise an einer in Figur 5 nicht dargestellten Brennkraftmaschine positioniert ist. Ein weiteres Gelenklager 2b des hydraulischen Spannelementes ist an einem Schwenkhebel 4 befestigt, welcher um eine Drehachse 5 des Halteelementes 3 schwenkbar ist. An dem Schwenkhebel 4 ist weiterhin eine Spannrolle 6 drehbar gelagert, die kraftschlüssig an einem Zugmittel 7 abgestützt, welches einem in Figur 5 nicht weiter abgebildeten Zugmitteltrieb zugeordnet ist. Das hydraulische Spannelement 1 umfasst ein dem Gelenklager 2a zugeordnetes Gehäuseteil 8 sowie ein Maschinenteil 9, das mit dem Gelenklager 2b in Verbindung steht. Ein in dem hydraulischen Spannelement 1 integriertes, zwischen dem Gehäuseteil 8 und dem Maschinenteil 9 abgestütztes Federmittel bewirkt eine in Pfeilrichtung wirkende Spreizkraft, eine Kraftkomponente, die den Schwenkhebel 8 im Gegenuhrzeigersinn verschwenkt, wodurch sich die Spannrolle 6 kraftschlüssig an dem Zugmittel 7 abstützt.

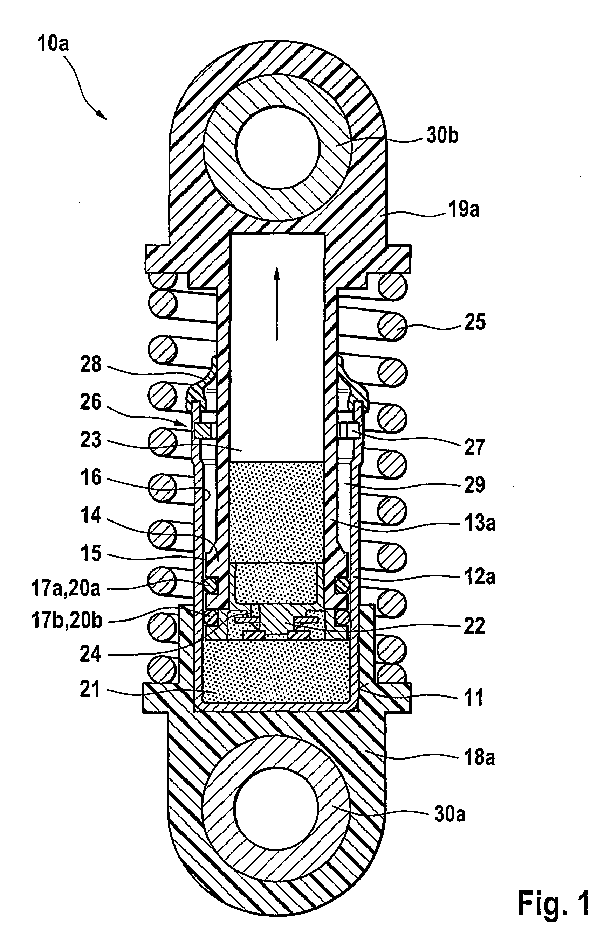

Die Wirkungsweise des erfindungsgemäßen Spannelementes erläuternd, zeigt die Figur 1 das hydraulische Spannelement 10a in einem Längsschnitt. Das aus Kunststoff hergestellte Gehäuseteil 18a bildet eine Aufnahme 11, in der ein topfartig gestalteter, vorzugsweise durch ein Tiefziehverfahren hergestellter Zylinder 12a eingepasst und lagefixiert ist. Der Zylinder 12a dient zur Aufnahme eines einstückig mit dem Maschinenteil 19a verbundenen, aus Kunststoff hergestellter Kolben 13a, der am freien Ende einen radial aufgeweiteten Führungsabschnitt 14 bildet. Unter Einhaltung eines Ringspaltes 15 ist der Führungsabschnitt 14 bis an eine Innenwandung 16 des Zylinders 12a geführt. Der Führungsabschnitt 14 weist zwei axial versetzte Ringnuten 17a, 17b auf, die zur Aufnahme von Dichtungen 20a, 20b bestimmt sind. Die beispielsweise als Quadring, Vierlippendichtring oder als O-Ring gestalteten Dichtungen 20a, 20b bilden eine wirksame Abdichtung des Kolbens 13a gegenüber dem Zylinder 12a. Der Zylinder 12a in Verbindung mit dem Kolben 13a begrenzt einen mit einem Hydraulikfluid gefüllten Druckraum 21.

Eine stirnseitig dem Kolben 13a zugeordnete Ventilbaugruppe 22 trennt den Druckraum 21 von einem für das Hydraulikfluid bestimmten Vorratsraum 23, der in dem als Hohlkörper ausgebildeten Kolben 13a integriert ist. Ein synchron zu einer Stellbewegung des Maschinenteils 19a gegenüber dem Gehäuseteil 18a erforderlicher Volumenaustausch des Hydraulikfluids zwischen dem Druckraum 21 und dem Vorratsraum 23 erfolgt über eine Drosselöffnung 24 der Ventilbaugruppe 22.

Bei einer Stellbewegung des Maschinenteils 19a und des damit in Verbindung stehenden Kolbens 13a in Pfeilrichtung, die der Kraftrichtung des als Schraubenfeder ausgebildeten Federmittels 25 entspricht, öffnet ein der Ventilbaugruppe 22 zugeordnetes Plattenventil. Dadurch kann das Hydraulikfluid von dem Vorratsraum 23 über eine Bypassbohrung zu der Drosselöffnung 24 oder einer Drosselbohrung in den Druckraum 21 strömen. Eine Umkehrung der Stellbewegung des Kolbens 13a bewirkt eine Rückströmung des Hydraulikfluids in den Vorratsraum 23 über die Drosselöffnung 24. Die Ventilbaugruppe 22 kann zusätzlich so ausgelegt sein, dass abhängig von der Strömungsrichtung des Hydraulikfluids sich der Volumenstrom unterscheidet. Beispielsweise nimmt die Strömungsrichtung Einfluss auf den Querschnitt der Drosselöffnung 24.

Nach erfolgtem Zusammenbau des hydraulischen Spannelementes 10a, d. h. vor der Endmontage, wird mittels einer Verliersicherung 26 eine Spreizkraft des Federmittels 25 begrenzt, die zwischen dem Gehäuseteil 18a und dem Maschinenteil 19a eingesetzt ist. Als Verliersicherung 26 dient ein formschlüssig in eine Ringnut oder partiell in Ausnehmungen des Zylinders 12a fixierter Sicherungsring 27. Der innenseitig radial vorstehende Sicherungsring 27 begrenzt eine Stellbewegung des Kolbens 13a, in dem der Sicherungsring 27 mit dem Führungsabschnitt 14 des Kolbens 13a zusammenwirkt.

Weiterhin ist eine Vordichtung 28 zwischen dem Zylinder 12a und dem Kolben 13a vorgesehen, die als Lippendichtung ausgebildet ist. Die Vordichtung 28 ist bevorzugt endseitig des Zylinders 12a fixiert und unter Einhaltung eines geringen Ringspaltes bis an die Außenkontur des Kolbens 13a geführt oder mit einer geringen Vorspannung an dem Kolben 13a abgestützt. Für die Funktion des hydraulischen Spannelementes 10a ist eine weitestgehend vertikale, eine bevorzugt der Figur 1 entsprechende Einbaulage erforderlich. Dabei bewirkt die Vordichtung 28 einen wirksamen Schutz gegenüber Verunreinigungen, des von dem Zylinder 12a und dem Kolben 3a radial begrenzten Spaltmaßes 29. Das Federmittel 25, ausgebildet als Schraubenfeder umschließt außenseitig den Zylinder 12a und den Kolben 13a und bildet folglich die Außenkontur des hydraulischen Spannelementes 10a zwischen dem Gehäuseteil 18a und dem Maschinenteil 19a. Übereinstimmend ist beiden Bauteilen, dem Gehäuseteil 18a und dem Maschinenteil 19a ein Anlenkauge 30a, 30b zugeordnet, die beispielsweise als Einlegeteil in die als Kunststoff-Spritzgussteil gestalteten Bauteile integriert sind.

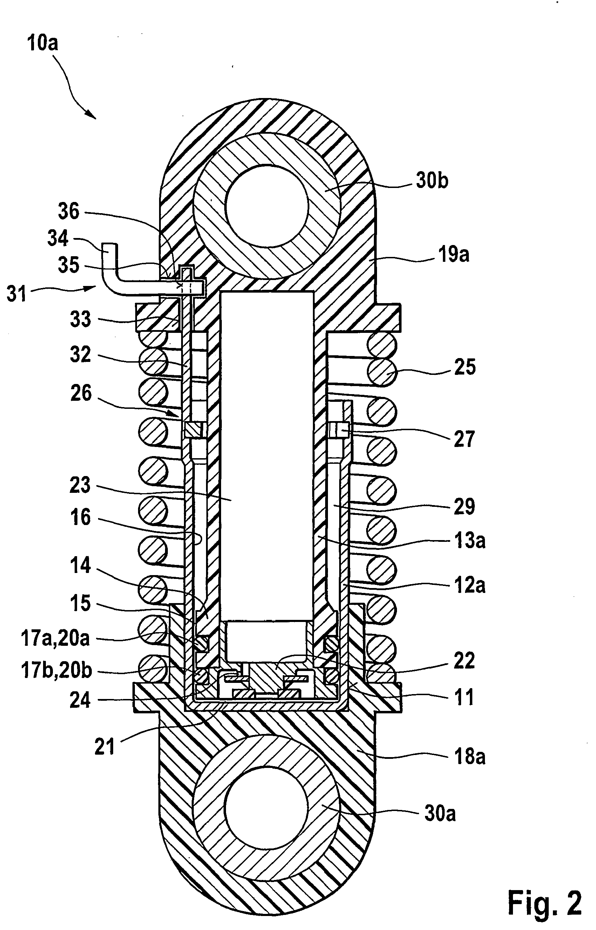

In den weiteren Ausführungsbeispielen (Figur 2 bis 4) eines erfindungsgemäßen hydraulischen Spannelementes sind die mit dem ersten Ausführungsbeispiel übereinstimmenden Bauteile mit gleichen Bezugsziffern versehen, so dass bezüglich deren Beschreibung auf die Ausführung zum ersten Ausführungsbeispiel verwiesen werden kann.

Die Figur 2 zeigt das Spannelement 10a mit einer Verriegelung 31. Diese dient dazu, das Gehäuseteil 18a sowie das Maschinenteil 19a in einer zusammengedrückten Stellung zu positionieren. Der Zylinder 12a weist dazu partiell einen Vorsprung 32 auf, der in eine Ausnehmung 33 des Maschinenteils 19a eingreift. Ein in eine Bohrung 35 des Maschinenteils 19a sowie einer korrespondierenden Bohrung 36 des Vorsprungs 32 eingesetzter Stift 34 fixiert die Bauteile Gehäuseteil 18a sowie das Maschinenteil 19a.

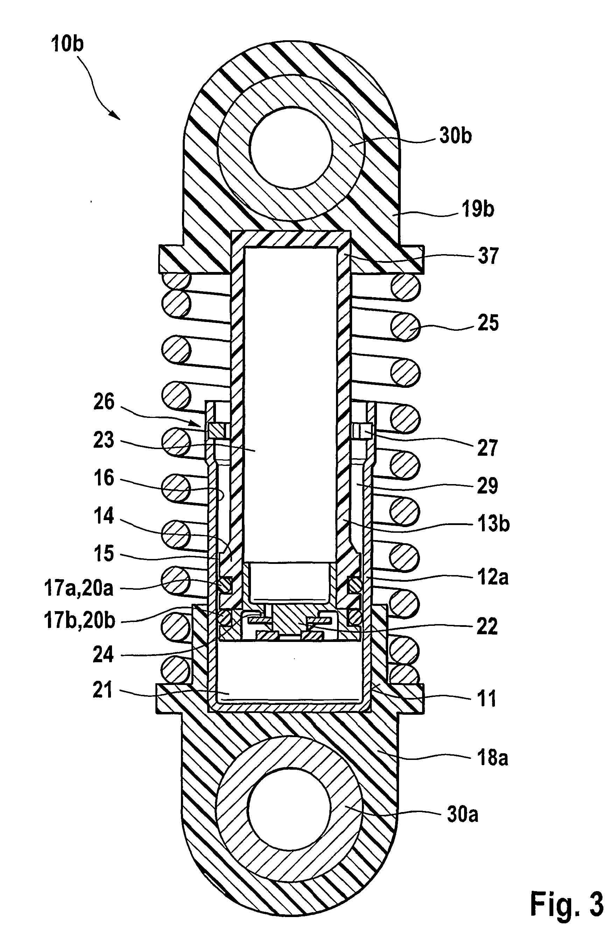

Das in Figur 3 abgebildete Spannelement 10b zeigt im Unterschied zu dem Spannelement 10a in den Figuren 1 und 2 ein Maschinenteil 19b, bei dem der Kolben 13b ein separates Bauteil darstellt. Der Kolben 13b wird durch ein topfartig geformtes Bauteil gebildet, das in eine Aufnahme 37 des Maschinenteils 19b eingepasst und dort lagefixiert ist. Das Maschinenteil 19b und der Kolben 13b können zur Erzielung einer kostengünstigen, optimalen Fertigung aus einem übereinstimmenden Werkstoff oder aus unterschiedlichen Werkstoffen hergestellt sein. Bevorzugt ist der Zylinder 12a aus Stahl bzw. einem Blechwerkstoff hergestellt, da dieser Werkstoff eine gewünschte verbesserte Wärmeabfuhr sicherstellt.

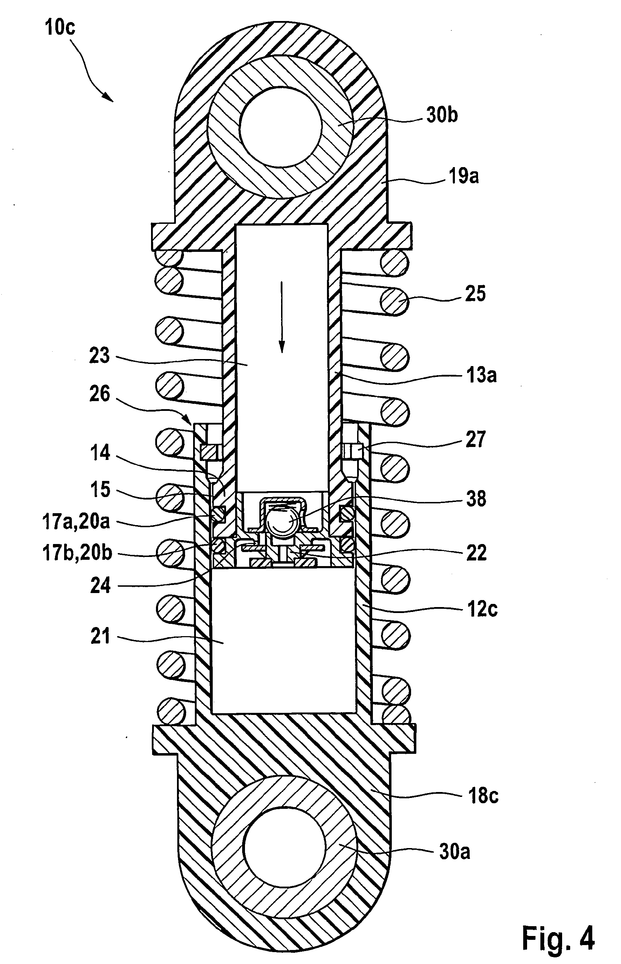

Die Figur 4 zeigt das Spannelement 10c, bei dem sowohl das Gehäuseteil 18c als auch das Maschinenteil 19a einteilig mit dem Zylinder 12c bzw. dem Kolben 13a verbunden sind. Gemäß der Darstellung in Figur 4 sind diese einstückig verbundenen Bauteile aus einem Kunststoff hergestellt. Die Ventilbaugruppe 22 integriert in dem Kolben 13c ist zusätzlich mit einem Überdruckventil 38 versehen. Die Einbaulage und die Funktion des Überdruckventils 38 ermöglicht bei einem das Spannelement 10c beaufschlagenden Spitzendruck, der den Kolben 13a in Pfeilrichtung belastet, einen schnelleren Volumenaustausch des Hydraulikfluids zwischen dem Druckraum 21 und dem Vorratsraum 23. Das als Einwegventil gestaltete Überdruckventil 38, das auch als Sicherheitsventil zu bezeichnen ist, umfasst eine federbelastete Kugel, die einen Strömungsquerschnitt bis zum Erreichen eines definierten Gegendrucks abdichtet, bevor sich ein weiterer Strömungsquerschnitt öffnet.

### Bezugszahlen

- 1: Spannelement
- 2a: Gelenklager
- 2b: Gelenklager
- 3: Halteelement
- 4: Schwenkhebel
- 5: Drehachse
- 6: Spannrolle
- 7: Zugmittel
- 8: Gehäuseteil
- 9: Maschinenteil
- 10a: Spannelement
- 10b: Spannelement
- 10c: Spannelement
- 11: Aufnahme
- 12a: Zylinder
- 12c: Zylinder
- 13a: Kolben
- 13b: Kolben
- 14: Führungsabschnitt
- 15: Ringspalt
- 16: Innenwandung
- 17a: Ringnut
- 17b: Ringnut
- 18a: Gehäuseteil
- 18c: Gehäuseteil
- 19a: Maschinenteil
- 19b: Maschinenteil
- 20a: Dichtung
- 20b: Dichtung
- 21: Druckraum
- 22: Ventilbaugruppe
- 23: Vorratsraum
- 24: Drosselöffnung
- 25: Federmittel
- 26: Verliersicherung
- 27: Sicherungsring
- 28: Vordichtung
- 29: Spaltmaß
- 30a: Anlenkauge
- 30b: Anlenkauge
- 31: Verriegelung
- 32: Vorsprung
- 33: Ausnehmung
- 34: Stift
- 35: Bohrung
- 36: Bohrung
- 37: Aufnahme
- 38: Überdruckventil

## Patentansprüche

1. Hydraulisches Spannelement, bestimmt zum Spannen eines Zugmittels (7) wie Riemen oder Ketten eines insbesondere für eine Brennkraftmaschine bestimmten Zugmitteltriebs, wobei das Spannelement (1; 10a bis 10c) ein ortsfest angeordnetes, einen Zylinder (12a, 12c) bildendes Gehäuseteil (8; 18a; 18c) sowie ein weiteres mittelbar oder unmittelbar mit einer Spannrolle (6) verbundenes Maschinenteil (9; 19a,19b) umfasst, zwischen denen ein Federmittel (25) eingesetzt ist, wobei der Zylinder (12a, 12c) zur Aufnahme und Führung eines mit dem Maschinenteil (9; 19a bis 19c) verbundenen, axial verschiebbaren Kolbens (13a, 13b) bestimmt ist, der stirnseitig einen mit einem Hydraulikfluid gefüllten Druckraum (21) begrenzt und abhängig von einer Stellbewegung des Kolbens (13a, 13b) ein Austausch des Hydraulikfluids von dem Druckraum (21) in einen Vorratsraum (23) oder in umgekehrter Richtung erfolgt, **dadurch gekennzeichnet, dass** der als Hohlkörper ausgebildete Kolben (13a, 13b) gleichzeitig den Vorratsraum (23) bildet, wobei der Druckraum (21) von dem Vorratsraum (23) durch eine stirnseitig in dem Kolben (13a, 13b) eingesetzte Ventilbaugruppe (22) getrennt ist, über die in beiden Richtungen der Stellbewegung des Kolbens (13a, 13b) der Austausch des Hydraulikfluids erfolgt und eine separate Abdichtung zwischen dem Kolben (13a, 13b) und dem Zylinder (12a, 12c) vorgesehen ist.

2. Hydraulisches Spannelement nach Anspruch 1, dass ein Ausgleich des Hydraulikfluids zwischen dem Druckraum (21) und dem Vorratsraum (23) über eine in der Ventilbaugruppe (22) integrierte Drosselöffnung (24) erfolgt.

3. Hydraulisches Spannelement nach Anspruch 2, wobei ein Durchflusswiderstand oder ein Durchflussvolumen des Hydraulikfluids durch die Drosselöffnung (24) von einer Strömungsrichtung abhängig ist.

4. Hydraulisches Spannelement nach Anspruch 1, wobei das Volumen des Vorratsraums (23) das Volumen des Druckraums (21) übertrifft.

5. Hydraulisches Spannelement nach Anspruch 1, bei dem die Ventilbaugruppe (22) ergänzend zu der Drosselöffnung (24) ein Überdruckventil (38) einschließt.

6. Hydraulisches Spannelement nach Anspruch 1, wobei zur Abdichtung des Kolbens (13a, 13b) gegenüber dem Zylinder (12a, 12c) zumindest eine dem Kolben (13a;13b) zugeordnete Dichtung (20a, 20b) vorgesehen ist, die sich in einem Einbauzustand an einer Innenwandung des Zylinders (12a, 12c) abstützt.

7. Hydraulisches Spannelement nach Anspruch 6, dessen Kolben (13a,13b) endseitig einen radial aufgeweiteten, zumindest eine Ringnut (17a, 17b) aufweisenden Führungsabschnitt (14) bildet, wobei die Ringnut (17a, 17b) zur Aufnahme der Dichtung (20a, 20b) bestimmt ist.

8. Hydraulisches Spannelement nach Anspruch 1, wobei der Kolben (13a) einstückig mit dem Maschinenteil (19a) verbunden ist.

9. Hydraulisches Spannelement nach Anspruch 1, bei dem in das Maschinenteil (19b) ein als separates Bauteil gestalteter Kolben (13b) eingesetzt und lagepositioniert ist.

10. Hydraulisches Spannelement nach Anspruch 9, dessen Maschinenteil (19b) und der Kolben (13b) aus einem übereinstimmenden Werkstoff oder aus unterschiedlichen Werkstoffen hergestellt sind.

11. Hydraulisches Spannelement nach Anspruch 1, versehen mit einem Zylinder (12a), der als ein separates, topfartig gestaltetes Bauteil in eine korrespondierende Aufnahme (11) des Gehäuseteils (18a) eingesetzt und positioniert ist.

12. Hydraulisches Spannelement nach Anspruch 1, wobei das Gehäuseteil (18c) einstückig mit dem Zylinder (12c) verbunden ist.

13. Hydraulisches Spannelement nach Anspruch 12, bei dem der Zylinder (12c) und das Gehäuseteil (18c) aus einem übereinstimmenden Werkstoff oder aus unterschiedlichen Werkstoffen hergestellt ist.

14. Hydraulisches Spannelement nach Anspruch 1, bei dem die Bauteile, das Gehäuseteil (18a, 18c) und das Maschinenteil (19a, 19b) aus Kunststoff und der Zylinder (12a) sowie der Kolben (13b) aus Stahl hergestellt sind, wobei der Zylinder (12a) und der Kolben (13b) vorzugsweise als ein Tiefziehteil gestaltet sind.

15. Hydraulisches Spannelement nach Anspruch 1, das eine Verliersicherung (26) zwischen dem Gehäuseteil (18a) und dem Maschinenteil (19a) einschließt, wobei ein innenseitig des Zylinders (12a) eingesetzter Sicherungsrings (27) in einer Endlage mit dem Führungsabschnitt (14) des Kolbens (13a) zusammenwirkt.

16. Hydraulisches Spannelement nach Anspruch 1, versehen mit einer eine Verriegelung (31) bildenden Montagesicherung, mit der das Gehäuseteil (18a) und das Maschinenteil (19a) in einer zusammengedrückten Stellung positioniert sind.

17. Hydraulisches Spannelement nach Anspruch 16, wobei zur Bildung der Verriegelung (31) der Zylinder (12a) partiell oder umlaufend verlängert, einen Vorsprung (32) aufweist, der in einer Endlage in eine Ausnehmung (33) des Maschinenteils (19a) eingreift und durch einen Stift (34) gehalten ist.

18. Hydraulisches Spannelement nach Anspruch 1, bei dem das Federmittel (25), insbesondere eine als Schraubenfeder ausgebildete Druckfeder, sowohl den Kolben (13a, 13b) als auch den Zylinder (12a, 12c) außenseitig umschließt, und dabei eine Mantelfläche des Federmittels (25) gleichzeitig eine Außenkontur des Spannelementes (10a bis 10c) bildet.

19. Hydraulisches Spannelement nach Anspruch 1, wobei eine endseitig des Zylinders (12a) befestigte Vordichtung (28) unter Einhaltung eines Ringspaltes oder mit einer geringen Anpresskraft mit dem Kolben (13a) zusammenwirkt.

20. Hydraulisches Spannelement nach Anspruch 1, das zur Befestigung Anlenkaugen (30a, 30b) einschließt, die jeweils in dem Gehäuseteil (18a, 18c) und dem Maschinenteil (19a, 19c) integriert sind.

## Claims

1. Hydraulic tensioning element, designed for tensioning a traction mechanism (7) such as a belt or chain of a traction mechanism drive designed in particular for an internal combustion engine, with the tensioning element (1; 10a to 10c) comprising a positionally fixedly arranged housing part (8; 18a; 18c), which forms a cylinder (12a, 12c), and a further machine part (9; 19a; 19b) which is connected indirectly or directly to a tensioning roller (6), between which housing part (8; 18a; 18c) and further machine part (9; 19a; 19b) is inserted a spring means (25), with the cylinder (12a, 12c) being designed to hold and guide an axially movable piston (13a, 13b) which is connected to the machine part (9; 19a to 19c) and which, at the end side, delimits a pressure space (21) which is filled with a hydraulic fluid, and with an exchange of hydraulic fluid taking place from the pressure space (21) into a storage space (23) or in the opposite direction as a function of an actuating movement of the piston (13a, 13b), **characterized in that** the piston (13a, 13b) which is formed as a hollow body simultaneously forms the storage space (23), with the pressure space (21) being separated from the storage space (23) by a valve assembly (22) which is inserted at the end side in the piston (13a, 13b) and via which the exchange of the hydraulic fluid takes place in both directions of the actuating movement of the piston (13a, 13b), and with a separate seal being provided between the piston (13a, 13b) and the cylinder (12a, 12c).

2. Hydraulic tensioning element according to Claim 1, **characterized in that** an equalization of the hydraulic fluid between the pressure space (21) and the storage space (23) takes place via a throttle opening (24) which is integrated in the valve assembly (22).

3. Hydraulic tensioning element according to Claim 2, with a throughflow resistance or a throughflow volume of the hydraulic fluid through the throttle opening (24) being dependent on a flow direction.

4. Hydraulic tensioning element according to Claim 1, with the volume of the storage space (23) exceeding the volume of the pressure space (21).

5. Hydraulic tensioning element according to Claim 1, in which the valve assembly (22) comprises an overpressure valve (38) in addition to the throttle opening (24).

6. Hydraulic tensioning element according to Claim 1, with at least one seal (20a, 20b) which is assigned to the piston (13a, 13b) being provided to seal off the piston (13a, 13b) with respect to the cylinder (12a, 12c), which seal (20a, 20b) is supported, in an assembled state, against an inner wall of the cylinder (12a, 12c).

7. Hydraulic tensioning element according to Claim 6, whose piston (13a, 13b) forms, at the end side, a radially flared guide section (14) which has at least one annular groove (17a, 17b), with the annular groove (17a, 17b) being designed to hold the seal (20a, 20b).

8. Hydraulic tensioning element according to Claim 1, with the piston (13a) being integrally connected to the machine part (19a).

9. Hydraulic tensioning element according to Claim 1, in which a piston (13b) which is formed as a separate part is inserted into and positioned in the machine part (19b).

10. Hydraulic tensioning element according to Claim 9, whose machine part (19b) and the piston (13b) are produced from a corresponding material or from different materials.

11. Hydraulic tensioning element according to Claim 1, provided with a cylinder (12a) which, as a separate pot-shaped part, is inserted into and positioned in a corresponding receptacle (11) of the housing part (18a).

12. Hydraulic tensioning element according to Claim 1, with the housing part (18c) being integrally connected to the cylinder (12c).

13. Hydraulic tensioning element according to Claim 12, in which the cylinder (12c) and the housing part (18c) are produced from a corresponding material or from different materials.

14. Hydraulic tensioning element according to Claim 1, in which the components, the housing part (18a, 18c) and the machine part (19a, 19b), are produced from plastic and the cylinder (12a) and the piston (13b) are produced from steel, with the cylinder (12a) and the piston (13b) preferably being formed as a deep-drawn part.

15. Hydraulic tensioning element according to Claim 1, which has a captive securing means (26) between the housing part (18a) and the machine part (19a), with a securing ring (27) which is inserted at the inner side of the cylinder (12a) interacting, in one end position, with the guide section (14) of the piston (13a).

16. Hydraulic tensioning element according to Claim 1, provided with an assembly securing means which forms a locking arrangement (31) and by means of which the housing part (18a) and the machine part (19a) are positioned in a compressed position.

17. Hydraulic tensioning element according to Claim 16, wherein to form the locking arrangement (31), the cylinder (12a), lengthened in part or around its full circumference, has a projection (32) which, in one end position, engages into a recess (33) of the machine part (19a) and is held by means of a pin (34).

18. Hydraulic tensioning element according to Claim 1, in which the spring means (25), in particular a pressure spring which is formed as a coil spring, surrounds both the piston (13a, 13b) and also the cylinder (12a, 12c) at the outside, and here, a lateral surface of the spring means (25) simultaneously forms an outer contour of the tensioning element (10a to 10c).

19. Hydraulic tensioning element according to Claim 1, with a preliminary seal (28) which is fastened to the end side of the cylinder (12a) interacting with the piston (13a) so as to maintain an annular gap or with a slight pressure force.

20. Hydraulic tensioning element according to Claim 1, which, for fastening, comprises link eyes (30a, 30b) which are integrated in each case in the housing part (18a, 18c) and in the machine part (19a, 19c).

## Revendications

1. Elément de serrage hydraulique conçu pour serrer un moyen de traction (7), par exemple une courroie ou une chaîne d'une transmission à moyen de traction utilisée en particulier sur un moteur à combustion interne, l'élément de serrage (1; 10a à 10c) comprenant une partie de boîtier (8; 18a; 18c) disposée en position fixe et formant un cylindre (12a, 12c) ainsi qu'une autre partie de machine (9; 19a, 19b) reliée directement ou indirectement à un galet de serrage (6) et entre lesquelles est inséré un moyen élastique (25), le cylindre (12a, 12c) étant destiné à reprendre et guider un piston (13a, 13b) coulissant axialement relié à la partie de machine (9; 19a à 19c), lequel piston délimite sur son côté frontal une chambre sous pression (21) remplie de fluide hydraulique, un échange de fluide hydraulique depuis la chambre sous pression (21) jusque dans une chambre de réserve (23) ou dans le sens inverse ayant lieu en fonction de la position de réglage du piston (13a, 13b),
**caractérisé en ce que**
le piston (13a, 13b) configuré comme corps creux forme en même temps la chambre de réserve (23), la chambre sous pression (21) étant séparée de la chambre de réserve (23) par un module de soupape (22) inséré frontalement dans le piston (13a, 13b), l'échange de fluide hydraulique s'effectuant par le déplacement de réglage du piston (13a, 13b) dans les deux directions, un joint d'étanchéité séparé étant prévu entre le piston (13a, 13b) et le cylindre (12a, 12c).

2. Elément de serrage hydraulique selon la revendication 1, **caractérisé en ce que** l'équilibrage du fluide hydraulique de la chambre sous pression (21) et la chambre de réserve (23) s'effectue par une ouverture étranglée (24) intégrée dans le module de soupape (22).

3. Elément de serrage hydraulique selon la revendication 2, dans lequel la résistance à l'écoulement ou le débit d'écoulement du fluide hydraulique par l'ouverture étranglée (24) dépend de la direction d'écoulement.

4. Elément de serrage hydraulique selon la revendication 1, dans lequel le volume de la chambre de réserve (23) est supérieur au volume de la chambre sous pression (21).

5. Elément de serrage hydraulique selon la revendication 1, dans lequel le module de soupape (22) contient une soupape de surpression (38) en plus de l'ouverture d'étranglement (24).

6. Elément de serrage hydraulique selon la revendication 1, dans lequel au moins un joint d'étanchéité (20a, 20b) associé au piston (13a, 13b) et qui, lorsqu'il est monté, s'appuie contre la paroi intérieure du cylindre (12a, 12c) est prévu pour assurer l'étanchéité du piston (13a, 13b) par rapport au cylindre (12a, 12c).

7. Elément de serrage hydraulique selon la revendication 6, dont le piston (13a, 13b) forme à son extrémité une partie de guidage (14) évasée radialement et présentant au moins une rainure annulaire (17a, 17b), la rainure (17a, 17b) étant destinée à reprendre le joint d'étanchéité (20a, 20b).

8. Elément de serrage hydraulique selon la revendication 1, dans lequel le piston (13a) est relié d'un seul tenant à la partie de machine (19a).

9. Elément de serrage hydraulique selon la revendication 1, dans lequel un piston (13b) configuré comme composant séparé est inséré et positionné dans la partie de machine (19b).

10. Elément de serrage hydraulique selon la revendication 9, dont la partie de machine (19b) et le piston (13b) sont fabriqués en un matériau identique ou en matériaux différents.

11. Elément de serrage hydraulique selon la revendication 1, doté d'un cylindre (12a) qui est inséré et positionné en tant que composant séparé configuré en forme de chapeau dans un logement correspondant (11) de la partie de boîtier (18a).

12. Elément de serrage hydraulique selon la revendication 1, dans lequel la partie de boîtier (18c) est reliée d'un seul tenant au cylindre (12c).

13. Elément de serrage hydraulique selon la revendication 12, dans lequel le cylindre (12c) et la partie de boîtier (18c) sont réalisés en un même matériau ou en matériaux différents.

14. Elément de serrage hydraulique selon la revendication 1, dans lequel les composants qui constituent la partie de boîtier (18a, 18c) et la partie de machine (19a, 19b) sont réalisés en matière synthétique et le cylindre (12a) ainsi que le piston (13b) sont réalisés en acier, le cylindre (12a) et le piston (13b) étant de préférence configurés comme pièces embouties.

15. Elément de serrage hydraulique selon la revendication 1, qui comprend entre la partie de boîtier (18a) et la partie de machine (19a) une protection (26) contre le détachement, un anneau de protection (27) inséré à l'intérieur du cylindre (12a) coopérant dans une position d'extrémité avec la partie de guidage (14) du piston (13a).

16. Elément de serrage hydraulique selon la revendication 1, doté d'une protection de montage qui forme un verrouillage (31) par lequel la partie de boîtier (18a) et la partie de machine (19a) sont positionnées en position comprimée.

17. Elément de serrage hydraulique selon la revendication 16, dans lequel, pour former le verrouillage (31), le cylindre (12a) prolongé partiellement ou sur sa périphérie présente une saillie (32) qui, dans une position de fin de course, s'engage dans un logement (33) de la partie de machine (19a) et est maintenue par un goujon (34).

18. Elément de serrage hydraulique selon la revendication 1, dans lequel le moyen élastique (25), en particulier un ressort de compression configuré comme ressort hélicoïdal, entoure l'extérieur du piston (13a, 13b) et du cylindre (12a, 12c), la surface d'enveloppe du moyen élastique (25) formant en même temps le contour extérieur de l'élément de serrage (10a à 10c).

19. Elément de serrage hydraulique selon la revendication 1, dans lequel un joint de pré-étanchéité (28) fixé à l'extrémité du cylindre (12a) coopère avec le piston (13a) en maintenant un interstice annulaire ou en exerçant une faible force de poussée.

20. Elément de serrage hydraulique selon la revendication 1, qui, pour être fixé, comprend des oeillets articulés (30a, 30b) qui sont intégrés respectivement dans la partie de boîtier (18a, 18c) et dans la partie de machine (19a, 19c).
